# EUROPEAN PATENT SPECIFICATION

(11) **EP 2 598 548 B1**
(45) Date of publication and mention of the grant of the patent: **22.10.2014**
(21) Application number: 11740873.2
(22) Date of filing: 26.07.2011
(51) Int. Cl.: C08G 18/40, C08G 18/63, C08G 18/10, C08L 75/04, C08G 101/00, C08L 9/00

(54) **POLYURETHANE WITH IMPROVED ABRASION RESISTANCE, THE METHOD FOR PREPARING THE SAME AND USE THEREOF**
POLYURETHAN MIT VERBESSERTER ABRIEBFESTIGKEIT, SEIN HERSTELLUNGSVERFAHREN UND SEINE VERWENDUNG
POLYURÉTHANE POSSÉDANT UNE RÉSISTANCE À L'ABRASION AMÉLIORÉE, SON PROCÉDÉ DE PRÉPARATION ET SON UTILISATION

(30) Priority: 29.07.2010 CN 201010240242
(43) Date of publication of application: 05.06.2013
(73) Proprietor: Bayer Intellectual Property GmbH, 40789 Monheim am Rhein (DE)
(72) Inventor: TORRES, Sam, Pudong, Shanghai 201210 (CN); CAO, Zhong, Shanghai 20037 (CN); LIU, Xiang, Chengdu, Sichuan 610017 (CN)
(74) Representative: BIP Patents
(86) International application number: PCT/EP2011/062831
(87) International publication number: WO 2012/013676

(56) References cited:
- US-A- 4 242 468
- US-A- 5 510 054
- US-A- 5 786 426
- DATABASE WPI Week 201047 Thomson Scientific, London, GB; AN 2010-H57066 XP002660564, & JP 2010 144066 A (INOAC CORP KK) 1 July 2010 (2010-07-01)

## Description

### Technical Field

The present invention pertains to polyurethane, in particularly, pertains to a polyurethane with improved abrasion resistance, the method for preparing the same and use thereof.

### Background

Polyurethane (in particularly polyurethane elastomer), which possesses good tear strength, good flex fatigue resistance and relative low density, is a kind of material having extensive use, such as footwear, carpet, roller, coating and soft parts used in automotive. Especially in the industry of footwear making, shoe-soles made from polyurethane (especially from polyurethane elastomers) possess a lot of advantages such as light weight, slip resistance, good rebound, high strength, oil resistance, etc.

Isocyanate compounds with react active hydrogen-containing compounds (for example, polyester polyols or polyether polyols), in the presence of a catalyst and/or blowing agent. The polyester-based polyurethanes possess good mechanical properties, however, the low temperature properties, hydrolysis resistance properties and antimicrobial properties of the polyester-based polyurethanes are bad, furthermore the processing technology of the polyester-based polyurethanes are relatively complicated. On the other hand, the polyether-based polyurethanes possess good hydrolysis resistance properties, good low temperature properties, however, the mechanical properties, especially the abrasion resistance, of the polyether-based polyurethanes are relatively bad. In addition, preparing polyurethane by use of non-aqueous inert physical blowing agent, such as fluorine-containing blowing agent, might pollute the environment; preparing polyurethane by using of water as blowing agent, will bring negative influence to the mechanical properties of the polyurethane, especially the abrasion resistance.

In the prior art, several trials have been applied to improve the mechanical properties of polyurethanes (especially polyurethane elastomers). For example, CN1092210C disclosed a method for preparing a polyurethane elastomer in presence of liquid polybutadiene to improve the mechanical properties of polyurethane elastomer. However, in accordance with the method, the amount of the liquid polybutadiene was 0.1-10 weight parts based on 100 weight parts of the polyols, wherein in the polybutadiene the amount of the 1,2-butene was less than 50%, the amount of the 2,3 (cis)-butene was higher than the amount of the 2,3-(trans) butane, the abrasion resistance of the polyurethane elastomer obtained according to this method was 81-270 mg (tested according to ISO4649).

In addition, US4242468 disclosed a method for preparing polyurethanes by adding a monohydroxylated polybutadiene as a nonmigratory plasticizer, US5079270 disclosed a method for preparing polyurethanes by adding a liquid polybutadiene as an internal mold release agent.

The present invention pertains to polyurethanes with improved abrasion resistance and methods for preparing the same. The polyurethanes obtained in this invention possess good abrasion resistance and surface appearance.

### Content of Invention

One objective of this invention is to provide a polyurethane. One embodiment of the present invention includes polyurethanes comprising the reaction product of a mixture comprising:
A) one or more isocyanates, wherein said one or more isocyanates is selected from the group consisting of diisocyanates, polyisocyanates, and mixtures thereof;
B) one or more polyols;
C) one or more catalysts; and
D) from 0.05 to 2 wt.% of a polyisoprene, based on 100 % by weight of A), B), C) and D), wherein the polyisoprene comprises one or more polyisoprene structural units selected from the group consisting of 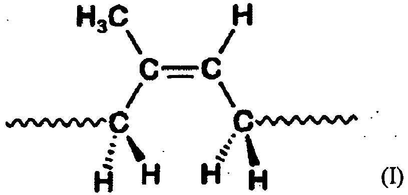 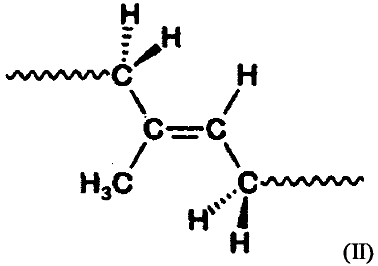 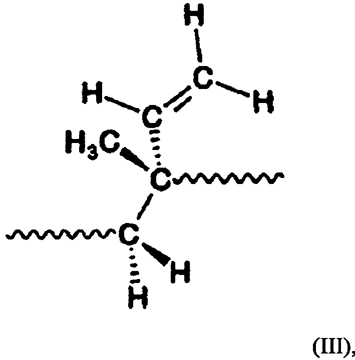
and

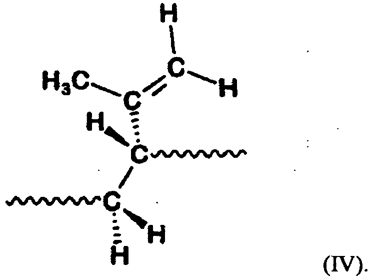

Preferably, the molecular weight of the polyisoprene is from 1000 to 80000.

Preferably, the density of the polyurethane is from 100 to 1200 kg/m³.

Preferably, the abrasion resistance of the polyurethane is from 30 to 200 mg, tested according to ISO4649.

Another objective of this invention is to provide a method of preparing polyurethanes, comprising reacting a mixture comprising:
A) one or more isocyanates, wherein said one or more isocyanates comprises diisocyanates, is selected from the group consisting of polyisocyanates and mixtures thereof;
B) one or more polyols;
C) one or more catalysts; and
D)from 0.05 to 2 wt.% polyisoprene, based on 100 % by weight of A), B), C) and D), wherein the polyisoprene comprises one or more polyisoprene structural units selected from the group consisting of 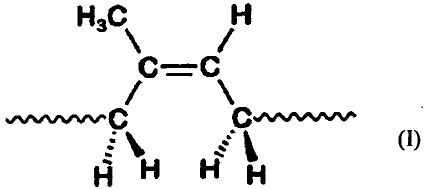 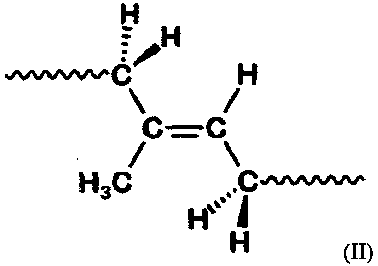 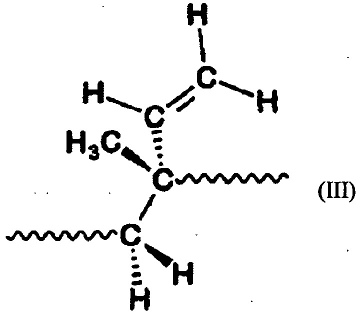 and

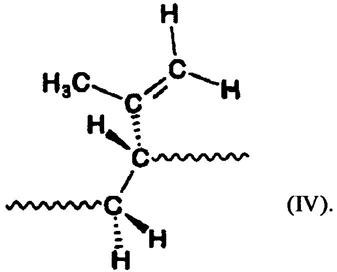

Preferably, the molecular weight of the polyisoprene is from 1000 to 80000.

Preferably, the density of the polyurethane is from 100 to 1200 kg/m³.

Preferably, the abrasion resistance of the polyurethane is from 30 to 200 mg, tested according to ISO4649.

Another objective of this invention is to provide a use of the polyurethanes in preparing polyurethane elastomers.

Another objective of this invention is to provide a use of the polyurethane in preparing microcellular polyurethane elastomers.

Another objective of this invention is to provide a use of the polyurethane in preparing shoe sole, carpet, roller, sealing strip, coating, tire, wiper, steering wheel or gasket.

In the present invention, preparing the polyurethanes by adding a polyisoprene in accordance with the described characteristics into the polyols and/or isocyanates will significantly improve the abrasion resistance thereof. Furthermore, comparing to the prior art, the polyurethane obtained in this invention does not have obvious pin holes, but possesses good surface quality.

### Detailed Mode to Carry Out the Invention

The present invention provides a method for preparing polyurethane with improved abrasion resistance by adding a polyisoprene with special characteristics. In this invention, the polyisoprene with special characteristics can be used to prepare polyols and/or isocyanates for preparing polyurethane.

In the present invention, the molecular weight of the polyisoprene is preferably 1000-80000, the amount of the polyisoprene is 0.05-2 wt.%, based on 100 % by weight of A), B), C) and D), wherein the polyisoprene comprises one or more polyisoprene structural units as following, 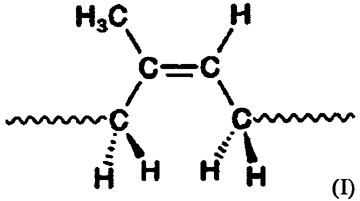 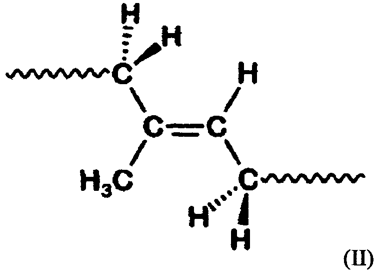 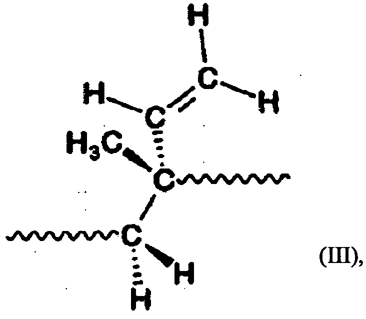 and

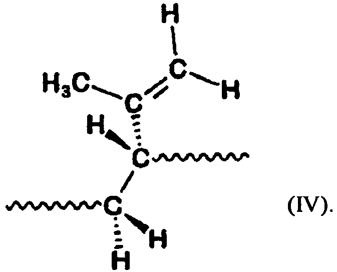

The amount of the polyisoprene is 0.5-2 wt.%, based on 100 wt.% of A), B), C) and D).

In the present invention, the isocyanate can be specified by a general formula R(NCO)ₙ, wherein R represents (cyclo) aliphatic alkylene comprising 2-18 carbon atoms, aromatic alkylene comprising 6-15 carbon atoms or (cyclo) aliphatic aromatic alkylene comprising 8-15 carbon atoms, n=2-4.

The isocyanate can be selected from, but not be limited to, ethylene diisocyanate, 1,4-tetramethylene diisocyanate, hexamethylene diisocyanate (HDI), 1,2-dodecane diisocyanate, cyclobutane-1,3-diisocyanate, cyclohexane 1,3-diisocyanate, 1,4-diisocyanate, 1-isocyanato-3,3,5-trimethyl-5-isocyanatomethyl-cyclohexane, 2,4-hexahydrotoluene diisocyanate, hexahydro-1,3-phenylene diisocyanate, hexahydro-1,4-phenylene diisocyanate, perhydro-2,4-diphenylmethane diisocyanate, perhydro-4,4'-diphenylmethane diisocyanate, 1,3- phenylene diisocyanate, 1,4-phenylene diisocyanate, 1,4-durol diisocyanate, 1,4-stilbene diisocyanate, 3,3'-dimethyl-4,4'-biphenylene diisocyanate, toluene 2,4-diisocyanate (TDI), 2,6-diisocyanate (TDI), diphenylmethane-2,4'-diisocyanate (MDI), diphenylmethane-2,2'-diisocyanate (MDI), diphenylmethane-4,4'-diisocyanate (MDI), naphthylene-1,5-diisocyanate (NDI), their mixture, their isomer, the mixture of they and their isomer.

The polyisocyanate may also include polyisocyanate modified by carbon diamine, allophanate and isocyanate. The polyisocyanate can be selected from, but not be limited to, diphenylmethane diisocyanate, diphenylmethane diisocyanate modified by carbodiimide, their mixture, their isomer, or the mixture of they and their isomer.

The polyisocyanate may also include isocyanate prepolymer. The NCO content of the isocyanate prepolymer can be selected from, but not be limited to, 5-30 wt.%, preferably 10-25 wt.%, based on 100 wt.% of the prepolymer.

In the present invention, the polyol can comprise one or more polyols, the average molecular weight of the polyol can be selected from, but not be limited to, 1000-10000, and the functionality of the polyol can be selected from, but not be limited to, 1-5, preferably 1.8-3.2.

In the present invention, the polyol can be selected from, but not be limited to, polyester polyols, polyether polyols, polycarbonate polyols, polymer polyols or their mixtures.

The polyester polyols can be produced from the reaction of dicarboxylic acids or dicarboxylic acid anhydrides with polyhydric alcohols. The dicarboxylic acids can be selected from, but not be limited to, aliphatic carboxylic acids containing 2 to 12 carbon atoms, such as succinic acid, malonic acid, glutaric acid, adipic acid, suberic acid, azelaic acid, sebacic acid, decane-dicarboxylic acid, maleic acid, fumaric acid, phthalic acid, isophthalic acid, terephthalic acid, and their mixture. The dicarboxylic acid anhydrides can be selected from, but not be limited to, phthalic anhydride, terachlorophthalic anhydride, maleic anhydride, and their mixture. The polyhydric alcohols can be selected from, but not be limited to, ethanediol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-decanediol, glycerol, trimethylol-propane, or their mixture. The polyester polyols, can also includes the polyester polyols prepared by lactones, for example, polyester polyols prepared by lactones can be selected from, but not be limited to, e-caprolactone.

The polyether polyols can be produced by known process, for example, by the reaction of alkene oxides with polyhydric alcohol starters in the presence catalysts. The catalysts can be selected from, but not be limited to, alkali hydroxides, alkali alkoxides, antimony pentachloride, boron fluoride etherate, or their mixture. The alkene oxides, can be selected from, but not be limited to, tetrahydrofuran, ethylene oxide, 1,2-propylene oxide, 1,2-butylene oxide, 2,3-butylene oxide, styrene oxide, or their mixture. The polyhydric alcohol starters can be selected from, but not be limited to, polyhydric compounds, such as, water, ethylene glycol, 1,2- propanediols or 1,3-propanediols, diethylene glycol, trimethylol-propane, or their mixture.

The polycarbonate polyols can be selected from, but not be limited to, polycarbonate diols. The polycarbonate diols can be produced by the reaction of diols with dialkyl or diaryl carbonates or phosgene. The diols can be selected from, but not be limited to, 1,2-propanediol, 1,3-propanediol, 1,4-butanediol, 1,5-pentanediol, 1,6-hexanediol, diethylene glycol, trioxyethylene glycol, or their mixture. The dialkyl or diaryl carbonates can be selected from, but not be limited to, diphenyl carbonate.

The polymer polyols can be selected from, but not be limited to, polymer-polyether polyols, polymer-polyester polyols, or their mixture.

The polymer-polyester polyols are graft polymer polyols based on polyesters or polyetheresters, preferably graft polymer polyol and polyester polyol dispersion. The graft polymer polyol can be selected from, but not be limited to, graft polymer polyol based on styrene and/or acrylonitrile; The styrene and/or acrylonitrile can be produced by the in situ polymerisation of acrylonitrile, styrene, or the mixture of styrene and acrylonitrile; In the mixture of styrene and acrylonitrile, the ratio by weight between the styrene and acrylonitrile is 90:10-10:90, preferably 70:30-30:70. The polymer polyester polyol dispersion comprises disperse phase, for example, containing inorganic fillers, polyureas, polyhydrazides, polyurethane containing tertiary amino groups in bonded form and/or melamine. The amount of the disperse phase is 1-50 wt.%, preferably 1-45 wt.%, based on 100 wt.% of the polymer-polyester polyol.

The polymer-polyether polyols are polymer-modified polyether polyols, preferably graft polyether polyols and polyether polyol dispersion. The graft polyether polyols can be selected from, but not be limited to, graft polymer polyol based on styrene and/or acrylonitrile; The styrene and/or acrylonitrile can be produced by the in situ polymerisation of acrylonitrile, styrene, or the mixture of styrene and acrylonitrile; In the mixture of styrene and acrylonitrile, the ratio by weight between the styrene and acrylonitrile is 90:10-10:90, preferably 70:30-30:70. The polymer polyether polyol dispersion comprises disperse phase, for example, containing inorganic fillers, polyureas, polyhydrazides, polyurethane containing tertiary amino groups in bonded form and/or melamine. The amount of the disperse phase is 1-50 wt.%, preferably 1-45 wt.%, based on 100 wt.% of the polymer-polyester polyol.

In the present invention, the chain extenders are active hydrogen atom containing compounds having a molecular weight less than 800, preferably 18-400.The active hydrogen atom containing compounds can be selected from, but not be limited to, alkanediols, dialkylene glycols, polyalkylene polyols, or their mixture, such as, ethanediol, 1,4-butanediol, 1,6-hexanediol, 1,7-heptanediol, 1,8-octanediol, 1,9-nonanediol, 1,10-decanediol, diethylene glycol, dipropylene glycol, polyoxyalkylene glycols, or their mixture. The active hydrogen atom containing compounds can also comprises branched chain and/or unsaturated alkanediols, such as 1,2-propanediol, 2-methyl-1,3-propanediol, 2,2-dimethyl-1,3-propanediol, 2-butyl-2-ethyl-1,3-propanediol, 2-butene-1,4-diol, 2-butyne-1,4-diol, alkanolamines, N-alkyldialkanolamines; the N-alkyldialkanolamines can be selected from, but not be limited to, ethanolamine, 2-aminopropanol, 3-amino-2,2-dimethylpropanol, N-methyl-diethanolamines, N-ethyl-diethanolamines, or their mixture. The active hydrogen atom containing compounds can also includes aliphatic amines, aromatic amines, such as 1,2-ethylenediamine, 1,3-propylenediamine, 1,4-butylenediamine, 1,6-hexamethylenediamine, isophoronediamine, 1,4-cyclohexamethylenediamine, N,N'-diethyl-phenylenediamine, 2,4-diaminotoluene, 2,6-diaminotoluene, or their mixture. The amount of the chain extenders is 1-50 wt.%, based on 100 wt.% of the polyols and chain extenders used in the reaction system.

In the present invention, the blowing agents can be selected from physical blowing agents or chemical blowing agents, preferably but not be limited to water, halohydrocarbons, hydrocarbons, and gases. The halohydrocarbons can be selected from, but not be limited to, monochlorodifuloromethane, dichloromonofluoromethane, dichlorofluoromethane, trichlorofluromethane, or their mixture. The hydrocarbons can be selected from, but not be limited to, butane, pentane, cyclopentane, hexane, cyclohexane, heptane, or their mixture. The gases can be selected from, but not be limited to, air, CO₂, and N₂. Preferably, the blowing agent is water. The amount of the blowing agent is determined by the density of polyurethanes.

In the present invention, the catalysts can be selected from, but not be limited to, amine catalysts, organo-metallic compounds, or their mixture. The amine catalysts can be selected from, but not be limited to, triethylamine, tributylamine, N-methylmorpholine, N-ethylmorpholine, N,N,N',N'-tetramethyl-ethylenediamine, pentamethyldiethylene-triamine, N,N-methylbenzylamine, N,N-dimethylbenzylamine, or their mixture. The organo-metallic compounds catalysts can be selected from, but not be limited to, organo-tin compounds, such as, tin(II) acetate, tin(II) octoate, tin(II) ethylhexonate, tin(II) laurate, dibutyltin oxide, dibutyltin dichloride, dibutyltin diacetate, dibutyltin dilaurate, dibutyltin maleate, dioctyltin diacetate, or their mixture. The amount of the said catalyst is 0.001-10 wt.%, based on 100 wt.% of the polyols used in the reaction system.

In the present invention, the surfactants can be selected from, but not be limited to, polyoxyalkylene derivatives of siloxane. The amount of the said surfactants is 0.01 to 8 wt.%, based on 100 wt.% of the polyols and chain extenders used in the reaction system.

In the present invention, the pigments and/or fillers can be selected from, but not be limited to, calcium carbonate, graphite, carbon black, titanium dioxide, iron oxide, alumina trihydrate, wollastonite, glass fibers, polyester fibers, polymeric fibers.

The density of the polyurethane provided in the present invention is 100-1200 kg/m³, preferably 400-1000 kg/m³.

The abrasion resistance of the polyurethane provided in the present invention is 30-200 mg, preferably 35-150 mg, more preferably 35-100 mg, tested in accordance with ISO4649.

Fig 1 is a cross sectional view of a polyurethane with surface a-a' prepared in accordance with the prior art. Fig 2 is a picture of the surface a-a' of the polyurethane, the magnification is 500:1. According to Fig 1, many non-closed pinholes can be found on the surface a-a' of the polyurethane prepared in accordance with the prior art. These non-closed pinholes, which can be found in Fig 2 as sunken parts on the polyurethane surface a-a' (so called "pinhole sunken parts"), will be harm to the appearance of the polyurethane products.

The polyurethane provided in accordance with the present invention possesses good surface quality. Fig 3 is a cross sectional view of a polyurethane with surface b-b' prepared in accordance with the present invention. Fig 4 is a picture of the surface b-b' of the polyurethane, the magnification is 500:1. According to Fig 3, no open pinhole can be found on the surface b-b' of the polyurethane prepared in accordance with the present invention. In Fig 4, there is no obvious pinhole sunken part on the surface b-b' of the polyurethane, therefore, the polyurethane prepared in accordance with the present invention possesses good product appearance.

The polyurethane provided in the present invention can be used to prepare shoe sole, carpet, roller, sealing strip, coating, tyre, wiper, steering wheel or gasket.

### Examples

The Examples and the methods provided in the present invention are illuminative but not restrictive.

### The materials mentioned in the description

| | |
|---|---|
| Polyol 1 (Bayflex 0650) | Polyether polyol, Molecular weight 4000, hydroxyl value 28 mg KOH/g, from Bayer MaterialScience; |
| Polyol 2 (Hyperlite E-850) | Polymer polyether polyol, hydroxyl value 20 mg KOH/g, from Bayer MaterialScience; |
| BD | 1,4-butanediol |
| Polyisoprene A (LIR 30) | Polyisoprene, average molecular weight 28000, from Kuraray; |
| Polyisoprene B (LIR 50) | Polyisoprene, average molecular weight 45000, from Kuraray; |
| Dabco S-25 | Amine catalyst, from Air Products; |
| Dabco 1028 | Amine catalyst, from Air Products; |
| Fomrez UL-1 | Tin catalyst, from Momentive; |
| Dabco DC 198 | Silicone surfactant, from Air Products; |
| ISO 1 (Desmodur VP.PU 10is14C) | Polyether based polyisocyanate, isocyanate content 19.9 wt.%, from Bayer MaterialScience; |
| ISO 2 | Adding 5 wt.% of Polyisoprene A in ISO 1 |

In the Examples, PENDRAULIK agitator purchased from PENDRAULIK Company was used as a mixing device.

### Method for preparing polyurethane

Reaction components B, C and D (and the optional E) were blended using a stirrer to obtain a blend.

The blend could be mixed and reacted with component A by two methods. In the first method, the blend was mixed and reacted with component A using a stirrer. In the second method, the blend was mixed and reacted with component A using a two components or a multi components mixing device. The mixing device could be a high pressure machine or a low pressure machine, preferably low pressure machine. The mixing process could be a double-stream mixing process or a multi-stream mixing process. For example, the pigment could be introducing as a third stream to change the color of the mixture quickly.

Molding techniques and equipments of polyurethane compounds were well known to those skilled in the art, especially using such learned treatises as Saunders and Fish, Polyurethane Chemestry and Technology (Part II) and Oertel, Polyurethane Handbook.

### Test Method

The density result of the polyurethane provided in this invention was tested in accordance with DIN EN ISO 845.

The hardness result of the polyurethane provided in this invention was tested in accordance with DIN 53505.

The abrasion resistance result of the polyurethane provided in this invention was tested in accordance with ISO4649.

The tensile strength result of the polyurethane provided in this invention was tested in accordance with DIN 53504.

The elongation result of the polyurethane provided in this invention was tested in accordance with DIN 53504.

The trouser tear result of the polyurethane provided in this invention was tested in accordance with DIN ISO 34.

The ross flex result of the polyurethane provided in this invention was tested in accordance

### Example E1-E8, Comparative Examples C1-C4

Preparing the polyurethanes in Example E1-E8 and Comparative Examples 1-4 in accordance with the materials and amounts thereof listed in Table 1 and Table 2.

Firstly, mixing the polyols and the additives in accordance with the amounts listed in the Table 1 and Table 2 at speed of 1400 rpm equably (the additives may optionally comprise chain extenders, blowing agents, surfactants, pigments or fillers). Thereafter, mixing the obtained mixture, which comprises the polyols and the additives, with the isocyanates listed in accordance with the amounts listed in the Table 1 and Table 2 at speed of 4200 rpm at 25°C, then introducing into a sheet-shaped aluminum mold with dimensions approximately 200mm x 200mm x 10mm, wherein the mold was controlled at 50°C, closing the mold, foaming and curing for 5 minutes, removing from the mold and obtaining a polyurethane. The obtained polyurethane was left at room temperature for at least 48 hours before undergoing testing, the properties of the polyurethane was listed in the Table 1 and Table 2.

**Table 1 Preparation of Polyurethane**

| | **E1** | **E2** | **E3** | **E4** | **E5** | **E6** | **C1** | **C2** | **C3** |
|---|---|---|---|---|---|---|---|---|---|
| **Polyol 1** | 78.22 | 77.22 | 74.22 | 77.42 | 77.02 | 79.22 | 79.22 | 79.42 | 79.02 |
| **Polyol 2** | 10.00 | 10.00 | 10.00 | 10.00 | 10.00 | 10.00 | 10.00 | 10.00 | 10.00 |
| **BD** | 8.60 | 8.60 | 8.60 | 8.60 | 8.60 | 8.60 | 8.60 | 8.60 | 8.60 |
| **Dabco S-25** | 1.20 | 1.20 | 1.20 | 1.20 | 1.20 | 1.20 | 1.20 | 1.20 | 1.20 |
| **Dabco 1028** | 0.40 | 0.40 | 0.40 | 0.40 | 0.40 | 0.40 | 0.40 | 0.40 | 0.40 |
| **Dabco DC 198** | 0.20 | 0.20 | 0.20 | 0.20 | 0.20 | 0.20 | 0.20 | 0.20 | 0.20 |
| **Fomrez UL-1** | 0.03 | 0.03 | 0.03 | 0.03 | 0.03 | 0.03 | 0.03 | 0.03 | 0.03 |
| **Polyisoprene A** | 1.00 | 2.00 | 5.00 | 2.00 | 2.00 | - | - | - | - |
| **Water** | 0.35 | 0.35 | 0.35 | 0.15 | 0.55 | 0.35 | 0.35 | 0.15 | 0.55 |
| **Total** | 100.00 | 100.00 | 100.00 | 100.00 | 100.00 | 100.00 | 100.00 | 100.00 | 100.00 |
| | | | | | | | | | |
| **ISO 1** | 60 | 60 | 59 | 58 | 64 | - | 60 | 58 | 64 |
| **ISO 2 (Containing 5 wt.% of Polyisoprene A)** | - | - | - | - | - | 64 | - | - | - |
| **Density (kg/m³)** | 600 | 600 | 600 | 900 | 400 | 600 | 600 | 900 | 400 |
| **Hardness (Shore A)** | 57 | 57 | 57 | 73 | 35 | 57 | 56 | 73 | 35 |
| **Abrasion (mg)** | 90 | 71 | 52 | 68 | 68* | 53 | 350 | 162 | 250* |

| | | | | | | | | | |
|---|---|---|---|---|---|---|---|---|---|
| *Test Method DIN 53516, half way (20meters). | | | | | | | | | |

**Table 2 Preparation of Polyurethane**

| | **E7** | **E8** | **C4** |
|---|---|---|---|
| **Polyol 1** | 77.22 | 77.22 | 79.22 |
| **Polyol 2** | 10.00 | 10.00 | 10.00 |
| **BD** | 8.60 | 8.60 | 8.60 |
| **Dabco S-25** | 1.20 | 1.20 | 1.20 |
| **Dabco 1028** | 0.40 | 0.40 | 0.40 |
| **Dabco DC 198** | 0.20 | 0.20 | 0.20 |
| **Fomrez UL-1** | 0.03 | 0.03 | 0.03 |
| **Polyisoprene A** | 2.00 | - | - |
| **Polyisoprene B** | - | 2.00 | - |
| **Water** | 0.35 | 0.35 | 0.35 |
| **Total** | 100.00 | 100.00 | 100.00 |
| | | | |
| **ISO 1** | 59 | 59 | 60 |
| | | | |
| **Density (kg/m³)** | 600 | 600 | 600 |
| **Hardness (Shore A)** | 64 | 65 | 60 |
| **Abrasion (mg)** | 66 | 66 | 350 |
| **Ross flex (100,000 cycles @ Room Temperature)** | <4mm | <4mm | <4mm |
| **Tensile Strength (Mpa)** | 5.8 | 5.6 | 5.0 |
| **Elongation (%)** | 500 | 446 | 513 |
| **Trousers Tear (kN/m)** | 8.6 | 7.6 | 7.9 |

In Example E1-E5, the polyurethane was prepared by adding the polyisoprene in accordance with the requirements of this invention into the polyols for preparing the polyurethane. The test results illustrated that the obtained polyurethanes possess improved abrasion resistance.

In Example E6, the polyurethane was prepared by adding the polyisoprene in accordance with the requirements of this invention into the isocyanates for preparing the polyurethane. The test results illustrated that the obtained polyurethanes possess improved abrasion resistance.

In Example E2, E4 and E5, different polyurethane with different densities were prepared by adding the polyisoprene in accordance with the requirements of this invention. The test results illustrated that the obtained polyurethanes possess improved abrasion resistance.

In Example E7 and E8, polyurethanes were prepared by adding the polyisoprene with different average molecular weights in accordance with the requirements of this invention. The test results illustrated that the obtained polyurethanes possess improved abrasion resistance.

## Claims

1. A polyurethane comprising a reaction product of a mixture comprising:
A) one or more isocyanates, wherein said one or more isocyanates is selected from the group consisting of diisocyanates, polyisocyanates, and mixtures thereof;
B) one or more polyols;
C) one or more catalysts; and
D) from 0.05 to 2 wt.% of a polyisoprene, based on 100 % by weight of A), B), C) and D), wherein the polyisoprene comprises one or more polyisoprene structural units selected from the group consisting of 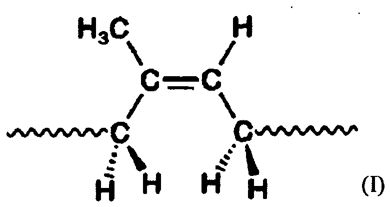 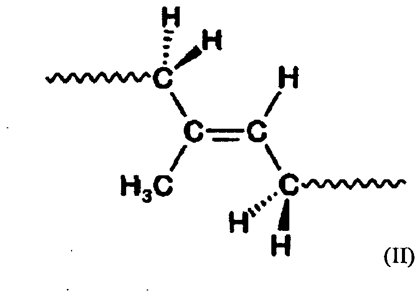 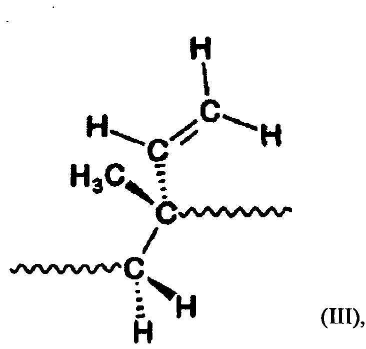 and

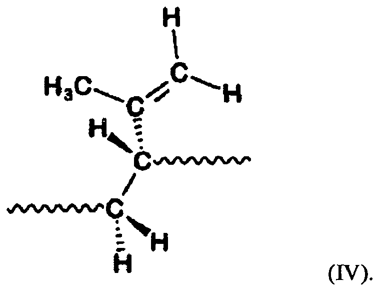

2. The polyurethane as claimed in Claim 1, wherein the mixture further comprise one or more E) additives selected from the group consisting of:
E1) one or more extenders;
E2) one or more blowing agents;
E3) one or more surfactants;
E4) one or more pigments; and
E5) one or more fillers.

3. The polyurethane as claimed in Claim 1, wherein the molecular weight of the polyisoprene is from 1000 to 80000.

4. The polyurethane as claimed in Claim 1, wherein the polyurethane has a density from 100 to 1200 kg/m³.

5. The polyurethane as claimed in Claim 1, wherein the polyurethane has an abrasion resistance of from 30 to 200 mg, tested in accordance with ISO4649.

6. The polyurethane as claimed in Claim 1, wherein the polyurethane has an abrasion resistance of from 35 to 100 mg, tested in accordance with ISO4649.

7. A method for preparing a polyurethane, comprising reacting a mixture comprising:
A) one or more isocyanates, wherein said one or more isocyanates is selected from the group consisting of diisocyanates, polyisocyanates and mixtures thereof;
B) one or more polyols;
C) one or more catalysts; and
D) from 0.05 to 2 wt.% of a polyisoprene, based on 100 % by weight of A), B), C) and D), wherein the polyisoprene comprises one or more polyisoprene structural units selected from the group consisting of 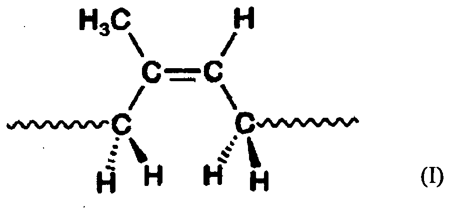 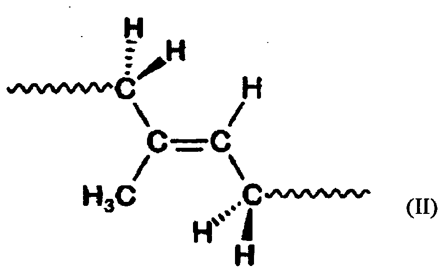 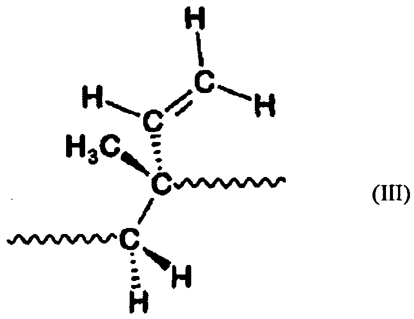 and 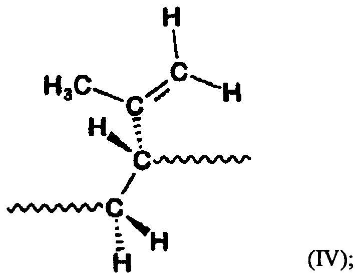 and
to form a polyurethane.

8. The method as claimed in Claim 7, wherein the mixture further comprises one or more E) additives selected from the group consisting of:
E1) one or more extenders;
E2) one or more blowing agents;
E3) one or more surfactants;
E4) one or more pigments; and
E5) one or more fillers.

9. The method as claimed in Claim 7, wherein the molecular weight of the polyisoprene is from 1000 to 80000.

10. The method as claimed in Claim 7, wherein the polyurethane has a density from 100 to 1200 kg/m³.

11. The polyurethane as claimed in Claim 7, wherein the polyurethane has an abrasion resistance from 30 to 200 mg, tested in accordance with ISO4649.

12. The polyurethane as claimed in Claim 11, wherein the polyurethane has an abrasion resistance from 35 to 100 mg, tested in accordance with ISO4649.

13. A use of the polyurethane as claimed in Claim 1 or 5 in preparing a polyurethane elastomer.

14. A use of the polyurethane as claimed in Claim 1 or 5 in preparing a microcellular polyurethane elastomer.

15. A use of the polyurethane as claimed in Claim 1 or 5 in preparing a shoe sole, a carpet, a roller, a sealing strip, a coating, a tire, a wiper, a steering wheel or a gasket.

16. A polyurethane comprising a reaction product of a mixture comprising:
A) one or more isocyanates, wherein said one or more isocyanates is selected from the group consisting of diisocyanates, polyisocyanates, and mixtures thereof;
B) one or more polyols;
C) one or more catalysts; and
D) from 0.05 to 2 wt.% of a polyisoprene, based on 100 % by weight of A), B), C) and D), wherein the polyisoprene comprises one or more polyisoprene structural units selected from the group consisting of 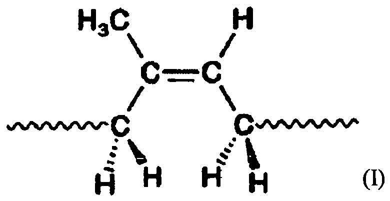 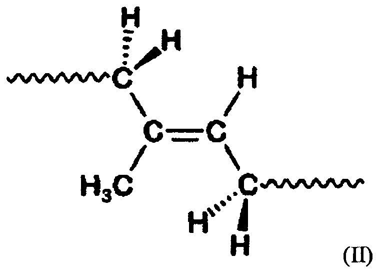 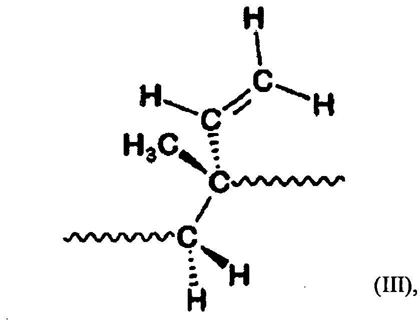 and 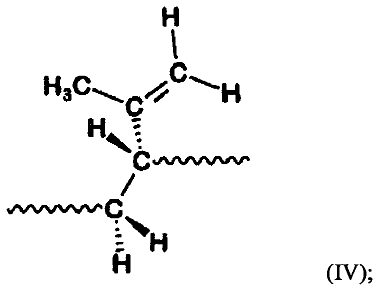 wherein, the polyurethane has a density from 100 to 1200 kg/m³; and
wherein the polyurethane has an abrasion resistance of from 30 to 200 mg, tested in accordance with ISO4649.

## Patentansprüche

1. Polyurethan, umfassend ein Reaktionsprodukt einer Mischung, umfassend:
A) ein oder mehrere Isocyanate, wobei das eine Isocyanat bzw. die mehreren Isocyanate aus der Gruppe bestehend aus Diisocyanaten, Polyisocyanaten und Mischungen davon ausgewählt ist bzw. sind;
B) ein oder mehrere Polyole;
C) einen oder mehrere Katalysatoren; und
D) 0,05 bis 2 Gew.-% eines Polyisoprens, bezogen auf 100 Gew.-% von A), B), C) und D), wobei das Polyisopren eine oder mehrere Polyisoprenen-Struktureinheiten aus der Gruppe bestehend aus 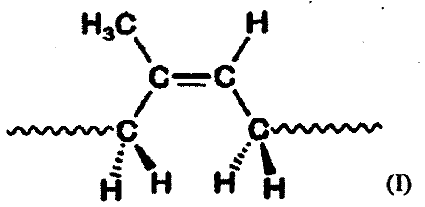 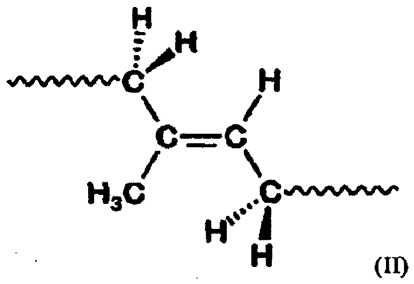 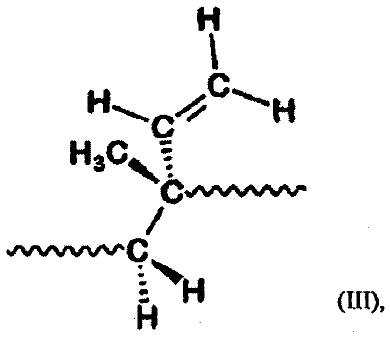 und 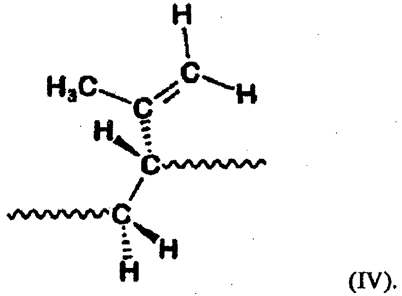 umfasst.

2. Polyurethan nach Anspruch 1, wobei die Mischung ferner ein oder mehrere E) Additive aus der Gruppe bestehend aus:
E1) einem oder mehreren Verlängerungsmitteln;
E2) einem oder mehreren Treibmitteln;
E3) einem oder mehreren Tensiden;
E4) einem oder mehreren Pigmenten; und
E5) einem oder mehreren Füllstoffen umfasst.

3. Polyurethan nach Anspruch 1, wobei das Molekulargewicht des Polyisoprens 1000 bis 80.000 beträgt.

4. Polyurethan nach Anspruch 1, wobei das Polyurethan eine Dichte von 100 bis 1200 kg/m³ aufweist.

5. Polyurethan nach Anspruch 1, wobei das Polyurethan eine gemäß ISO 4649 geprüfte Abriebfestigkeit von 30 bis 200 mg aufweist.

6. Polyurethan nach Anspruch 1, wobei das Polyurethan eine gemäß ISO 4649 geprüfte Abriebfestigkeit von 35 bis 100 mg aufweist.

7. Verfahren zur Herstellung eines Polyurethans, bei dem man eine Mischung, umfassend:
A) ein oder mehrere Isocyanate, wobei das eine Isocyanat bzw. die mehreren Isocyanate aus der Gruppe bestehend aus Diisocyanaten, Polyisocyanaten und Mischungen davon ausgewählt ist bzw. sind;
B) ein oder mehrere Polyole;
C) einen oder mehrere Katalysatoren; und
D) 0,05 bis 2 Gew.-% eines Polyisoprens, bezogen auf 100 Gew.-% von A), B), C) und D), wobei das Polyisopren eine oder mehrere Polyisoprenen-Struktureinheiten aus der Gruppe bestehend aus 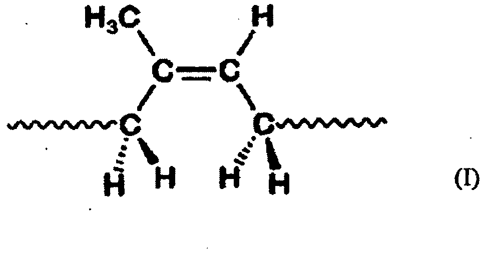 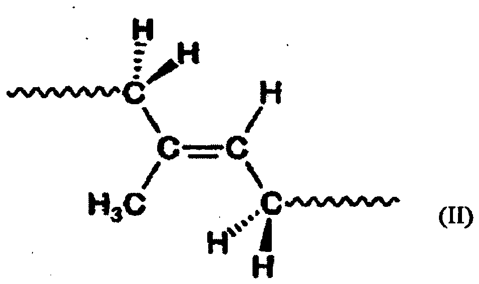 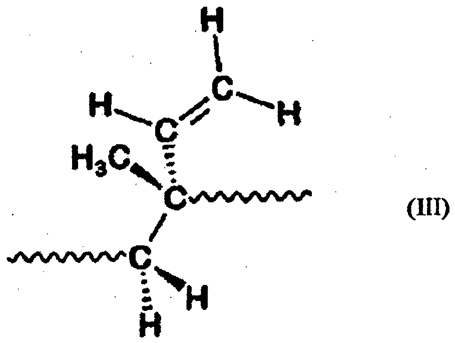 und 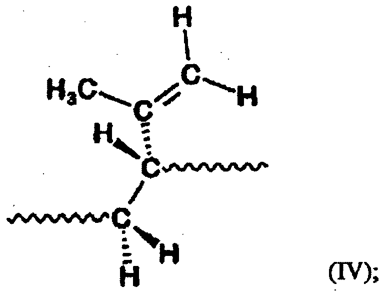 umfasst;
zu einem Polyurethan umsetzt.

8. Verfahren nach Anspruch 7, bei dem die Mischung ferner ein oder mehrere E) Additive aus der Gruppe bestehend aus:
E1) einem oder mehreren Verlängerungsmitteln;
E2) einem oder mehreren Treibmitteln;
E3) einem oder mehreren Tensiden;
E4) einem oder mehreren Pigmenten; und
E5) einem oder mehreren Füllstoffen umfasst.

9. Verfahren nach Anspruch 7, bei dem das Molekulargewicht des Polyisoprens 1000 bis 80.000 beträgt.

10. Verfahren nach Anspruch 7, bei dem das Polyurethan eine Dichte von 100 bis 1200 kg/m³ aufweist.

11. Polyurethan nach Anspruch 7, wobei das Polyurethan eine gemäß ISO 4649 geprüfte Abriebfestigkeit von 30 bis 200 mg aufweist.

12. Polyurethan nach Anspruch 11, wobei das Polyurethan eine gemäß ISO 4649 geprüfte Abriebfestigkeit von 35 bis 100 mg aufweist.

13. Verwendung des Polyurethans nach Anspruch 1 oder 5 bei der Herstellung eines Polyurethanelastomers.

14. Verwendung des Polyurethans nach Anspruch 1 oder 5 bei der Herstellung eines mikrozellulären Polyurethanelastomers.

15. Verwendung des Polyurethans nach Anspruch 1 oder 5 bei der Herstellung einer Schuhsohle, eines Teppichs, einer Walze, eines Dichtungsstreifens, einer Beschichtung, eines Reifens, eines Wischers, eines Lenkrads oder einer Dichtung.

16. Polyurethan, umfassend ein Reaktionsprodukt einer Mischung, umfassend:
A) ein oder mehrere Isocyanate, wobei das eine Isocyanat bzw. die mehreren Isocyanate aus der Gruppe bestehend aus Diisocyanaten, Polyisocyanaten und Mischungen davon ausgewählt ist bzw. sind;
B) ein oder mehrere Polyole;
C) einen oder mehrere Katalysatoren; und
D) 0,05 bis 2 Gew.-% eines Polyisoprens, bezogen auf 100 Gew.-% von A), B), C) und D), wobei das Polyisopren eine oder mehrere Polyisoprenen-Struktureinheiten aus der Gruppe bestehend aus 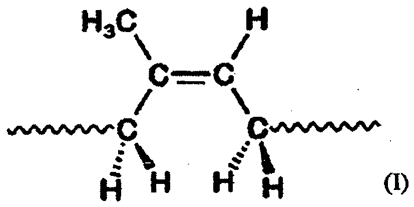 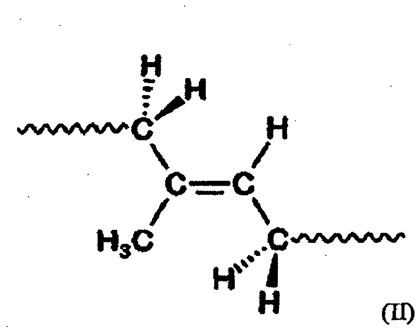 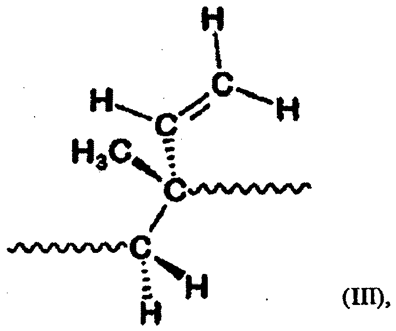 und 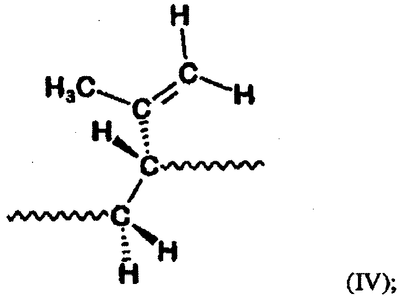 umfasst;
wobei das Polyurethan eine Dichte von 100 bis 1200 kg/m³ aufweist; und
wobei das Polyurethan eine gemäß ISO 4649 geprüfte Abriebfestigkeit von 30 bis 200 mg aufweist.

## Revendications

1. Polyuréthane comprenant un produit de réaction d'un mélange comprenant :
A) un ou plusieurs isocyanates, lesdits un ou plusieurs isocyanates étant choisis dans le groupe constitué par les diisocyanates, les polyisocyanates, et des mélanges de ceux-ci ;
B) un ou plusieurs polyols ;
C) un ou plusieurs catalyseurs ; et
D) de 0,05 à 2 % en poids d'un polyisoprène, rapporté à 100 % en poids de A), B), C) et D), le polyisoprène comprenant un ou plusieurs motifs élémentaires de polyisoprène choisis dans le groupe constitué par 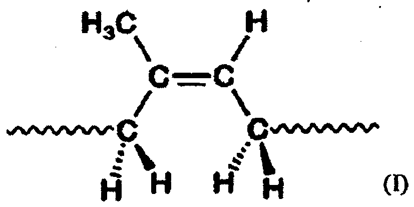 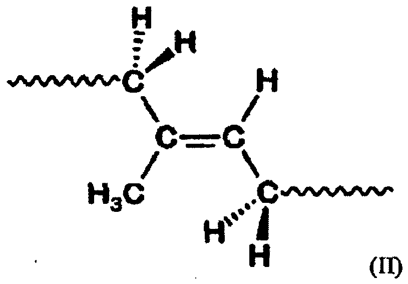 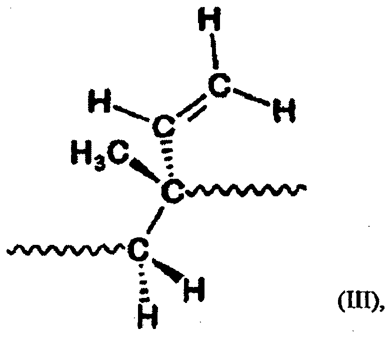 et

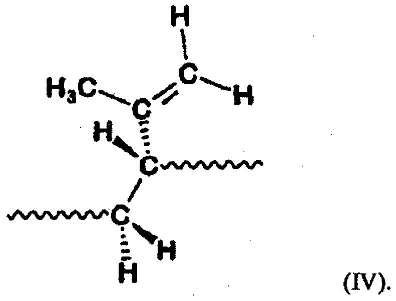

2. Polyuréthane selon la revendication 1, dans lequel le mélange comprend en outre un ou plusieurs additifs E) choisis dans le groupe constitué par :
E1) un ou plusieurs diluants ;
E2) un ou plusieurs agents gonflants ;
E3) un ou plusieurs tensioactifs ;
E4) un ou plusieurs pigments ; et
E5) une ou plusieurs charges.

3. Polyuréthane selon la revendication 1, dans lequel la masse moléculaire du polyisoprène est de 1000 à 80000.

4. Polyuréthane selon la revendication 1, dans lequel le polyuréthane possède une masse volumique de 100 à 1200 kg/m³.

5. Polyuréthane selon la revendication 1, dans lequel le polyuréthane possède une résistance à l'abrasion allant de 30 à 200 mg, testée conformément à ISO4649.

6. Polyuréthane selon la revendication 1, dans lequel le polyuréthane possède une résistance à l'abrasion allant de 35 à 100 mg, testée conformément à ISO4649.

7. Procédé pour préparer un polyuréthane, comprenant la réaction d'un mélange comprenant :
A) un ou plusieurs isocyanates, lesdits un ou plusieurs isocyanates étant choisis dans le groupe constitué par les diisocyanates, les polyisocyanates et des mélanges de ceux-ci ;
B) un ou plusieurs polyols ;
C) un ou plusieurs catalyseurs ; et
D) de 0,05 à 2 % en poids d'un polyisoprène, rapporté à 100 % en poids de A), B), C) et D), le polyisoprène comprenant un ou plusieurs motifs élémentaires de polyisoprène choisis dans le groupe constitué par 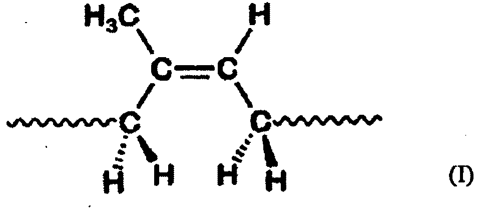 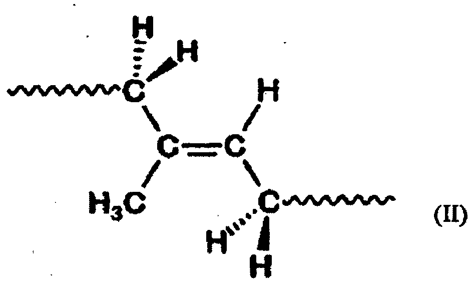 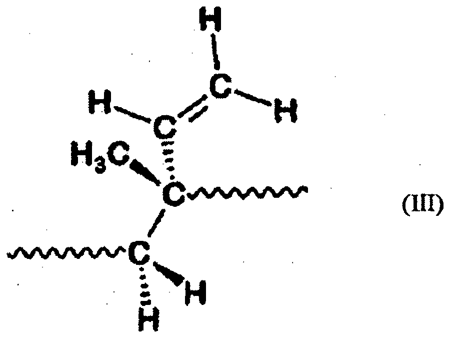 et 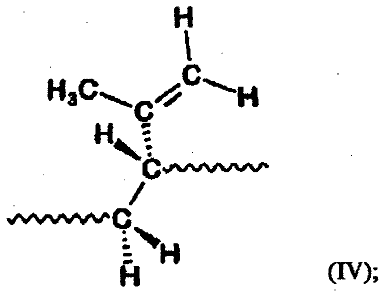 pour former un polyuréthane.

8. Procédé selon la revendication 7, dans lequel le mélange comprend en outre un ou plusieurs additifs E) choisis dans le groupe constitué par :
E1) un ou plusieurs diluants ;
E2) un ou plusieurs agents gonflants ;
E3) un ou plusieurs tensioactifs ;
E4) un ou plusieurs pigments ; et
E5) une ou plusieurs charges.

9. Procédé selon la revendication 7, dans lequel la masse moléculaire du polyisoprène est de 1000 à 80000.

10. Procédé selon la revendication 7, dans lequel le polyuréthane possède une masse volumique de 100 à 1200 kg/m³.

11. Polyuréthane selon la revendication 7, dans lequel le polyuréthane possède une résistance à l'abrasion de 30 à 200 mg, testée conformément à ISO4649.

12. Polyuréthane selon la revendication 11, dans lequel le polyuréthane possède une résistance à l'abrasion de 35 à 100 mg, testée conformément à ISO4649.

13. Utilisation du polyuréthane selon la revendication 1 ou 5 pour préparer un élastomère de polyuréthane.

14. Utilisation du polyuréthane selon la revendication 1 ou 5 pour préparer un élastomère de polyuréthane microcellulaire.

15. Utilisation du polyuréthane selon la revendication 1 ou 5 pour préparer une semelle de chaussure, une moquette, un rouleau, un ruban d'étanchéité, un revêtement, un pneumatique, un balai d'essuie-glace, un volant de véhicule ou un joint d'étanchéité.

16. Polyuréthane comprenant un produit de réaction d'un mélange comprenant :
A) un ou plusieurs isocyanates, lesdits un ou plusieurs isocyanates étant choisis dans le groupe constitué par les diisocyanates, les polyisocyanates, et des mélanges de ceux-ci ;
B) un ou plusieurs polyols ;
C) un ou plusieurs catalyseurs ; et
D) de 0,05 à 2 % en poids d'un polyisoprène, rapporté à 100 % en poids de A), B), C) et D), le polyisoprène comprenant un ou plusieurs motifs élémentaires de polyisoprène choisis dans le groupe constitué par 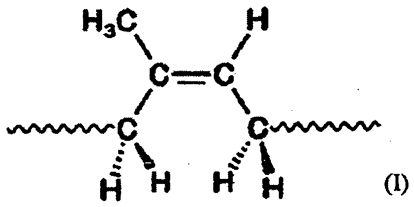 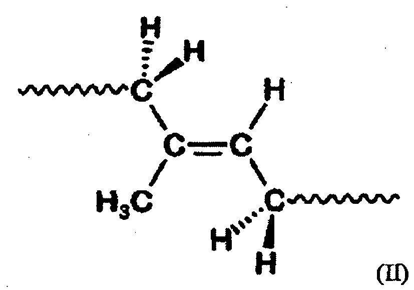 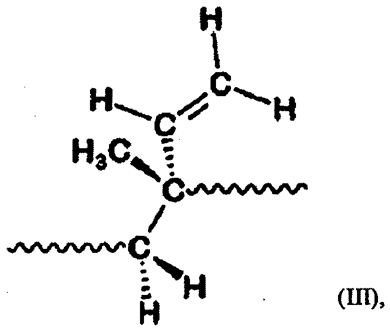 et 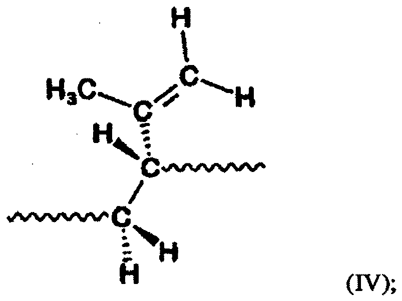 dans lequel le polyuréthane possède une masse volumique de 100 à 1200 kg/m³ ; et
dans lequel le polyuréthane possède une résistance à l'abrasion allant de 30 à 200 mg, testée conformément à ISO4649.
